(19) Europäisches Patentamt
European Patent Office
Office européen des brevets

(11) **EP 4 625 034 A1**

(12) # EUROPEAN PATENT APPLICATION

(43) Date of publication:
**01.10.2025 Bulletin 2025/40**

(21) Application number: **25164495.1**

(22) Date of filing: **18.03.2025**

(51) International Patent Classification (IPC):
**G02F 1/29** (2006.01)  **G02C 7/08** (2006.01)
**G02F 1/1343** (2006.01)  **G02B 3/08** (2006.01)

(52) Cooperative Patent Classification (CPC):
**G02F 1/294; G02B 3/08; G02C 7/083;
G02F 1/134309;** G02C 2202/12; G02C 2202/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.03.2024 FI 20245352**

(71) Applicant: **Pixieray Oy
02630 Espoo (FI)**

(72) Inventors:
• **Kataja, Mikko
00100 Helsinki (FI)**
• **Pitkänen, Ari
01200 Vantaa (FI)**
• **Eiden, Niko
02630 Espoo (FI)**
• **Melakari, Klaus
02140 Espoo (FI)**

(74) Representative: **Moosedog Oy
Kurjenmäenkatu 10 B 49
20700 Turku (FI)**

(54) **OPTICAL ELEMENT AND METHOD FOR ELECTRODE DESIGNING OF OPTICAL ELEMENT**

(57) Disclosed is a method for designing an electrode pattern (500) for obtaining an optical element (600), the method comprising: determining a refractive index profile (300) for an active material (602) included in the optical element; determining, based on the refractive index profile, a voltage profile (400) indicative of a voltage distribution to be applied along the radius or optical axis of the active material to cause a variation in a refractive index of the active material corresponding to the refractive index profile; generating an electrode pattern (500), with a pair of end-terminals (502a, 502b), constituting a set of segments (504a-504g) associated with a set of resistances; and obtaining the optical element by depositing the electrode pattern on the active material for application of the voltage distribution along the radius or optical axis of the active material when a set of drive voltages are applied to the pair of end-terminals.

```
┌────────────────────────────────────────┐
│ DETERMINE REFRACTIVE INDEX FOR ACTIVE  │
│              MATERIAL                   │
│                102                      │
└────────────────────────────────────────┘
                    │
                    ▼
┌────────────────────────────────────────┐
│ DETERMINE, BASED ON REFRACTIVE INDEX   │
│       PROFILE, VOLTAGE PROFILE          │
│                104                      │
└────────────────────────────────────────┘
                    │
                    ▼
┌────────────────────────────────────────┐
│ GENERATE ELECTRODE PATTERN HAVING PAIR │
│          OF END-TERMINALS               │
│                106                      │
└────────────────────────────────────────┘
                    │
                    ▼
┌────────────────────────────────────────┐
│ OBTAIN OPTICAL ELEMENT BY DEPOSITING   │
│ ELECTRODE PATTERN ON ACTIVE MATERIAL   │
│                108                      │
└────────────────────────────────────────┘
```

**FIG. 1**

EP 4 625 034 A1

**Description**

TECHNICAL FIELD

The present disclosure relates to optical apparatus electrode design. The present disclosure also relates to an optical element and a method for electrode designing of the optical element.

BACKGROUND

An optical lens assembly may include one or more optical elements and an active material. The active material may have certain properties (such as physical properties, chemical properties, anisotropic optical properties, and so on) that allow the active material to be controlled using various means. The active material may be controlled using various means such as electrical, magnetic, mechanical, and so on, such that different optical powers are produced in different portions or regions of the one or more optical elements. For example, the active material may be a liquid crystal material situated in a thin liquid crystal cell. The liquid crystal material may be controlled by applying an electric field on the liquid crystal material. The application of the electric field may cause an orientation of liquid crystal molecules in the liquid crystal material to be changed or altered. The liquid crystal molecules may orient themselves in a direction of the electric field, which may lead to a change in a refractive index of the liquid crystal material. The change in the refractive index may be due to anisotropic optical properties of the liquid crystal material such as birefringence. The birefringence property may enable usage of the liquid crystal material in designing an electronically tuneable optical element (such as a lens).

The variation of refractive index of the liquid crystal material, or any active material for that matter, may follow a specific pattern. For effecting the variation of refractive index through the application of the electric field, different voltages may be applied across the active material. For the application of the voltages, a specific electrode pattern that distributes the voltage according to a desired optical profile can be used. Conventionally, electrode patterns generate voltages that follow the desired profile of the optical element. For an optical element (such as a lens) the optical profile may follow a spherical or parabolic pattern. The electrode pattern is then designed to create a voltage distribution scheme, i.e., a variation of voltages applied across the active material that follows a spherical or parabolic pattern. Such patterns assume that the variation of refractive index with respect to applied voltage is linear, which is generally true for only for a limited voltage range. Thus, the use of the voltage distribution scheme across the active material may limit an optical power that may be produced by the optical element and/or aperture of the optical element.

Alternatively, electrodes positioned at different regions of the active material may be controlled separately with their own voltages, which enables application of arbitrary electric field profiles across the active material to produce any desired variation of refractive index. To take full advantage of this approach, the device needs to contain electronic control devices (processors) for enabling application of a large number of independent voltages at different regions of the active material, while the electrode pattern over the active material needs to be patterned so that the aforementioned control voltages are applied correctly at right positions without interfering with each other. This can be realized by, for example, placing independent electrodes at each of the different region such that the electrodes in different layers are electrically isolated from each other. Implementation of such a realization may complicate a manufacturing process of the active optical element.

Therefore, considering the foregoing discussion, there exists a need to overcome the aforementioned drawbacks.

SUM MARY

The aim of the present disclosure is to provide an optical element and a method for electrode designing of the optical element, to obtain a patterned electrode that may enable application of a voltage distribution across an active material of the optical element. The voltage distribution is such that an entire range of each tuneable property of the active material (such as birefringence) is utilized for achieving a greater optical power and/or aperture for the optical element and reduction in number of needed Fresnel zones. The aim of the present disclosure is achieved by the provided optical element and the method for electrode designing of the optical element as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

BRIEF DESCRIPTION OF THE DRAWINGS

FIG. 1 depicts steps of a method for electrode designing of an optical element, in accordance with an embodiment of the present disclosure;

FIG. 2 is a schematic diagram of an optical lens assembly, according to an embodiment of the present disclosure;

FIG. 3, is a graph that illustrates a target refractive index profile for an active material included in an optical element, in accordance with an embodiment of the present disclosure;

FIG. 4 is a graph that illustrates a voltage profile indicative of a voltage distribution to be applied on an active material of an optical element, in accordance with an embodiment of the present disclosure;

FIG. 5 illustrates an exemplary electrode pattern to be deposited over an active material of an optical element, in accordance with an embodiment of the present disclosure;

FIG. 6 illustrates an exemplary optical element that is obtained based on deposition of an electrode pattern on an active material, in accordance with an embodiment of the present disclosure;

FIGs. 7A-7C are cross-sectional views of an exemplary optical element that includes two optically transparent substrates and an active element, in accordance with various embodiments of the present disclosure;

FIG. 8 illustrates an exemplary optical element that may function as a Fresnel lens, in accordance with an embodiment of the present disclosure.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a method for designing an electrode pattern for obtaining an optical element, the method comprising:

determining a refractive index profile for an active material included in the optical element, wherein the refractive index profile is indicative of a first variation of a refractive index difference along a radius or an optical axis of the active material;
determining, based on the refractive index profile, a voltage profile indicative of a voltage distribution that is to be applied along the radius or the optical axis of the active material, wherein application of the voltage distribution causes a variation in a refractive index of the active material that corresponds to the refractive index profile;

generating at least one electrode pattern, wherein each electrode pattern includes a pair of end-terminals, wherein each electrode pattern constitutes a set of segments associated with a set of resistances, and wherein the set of resistances enable application of the voltage distribution along the radius or the optical axis of the active material when a set of drive voltages are applied to the pair of end-terminals; and obtaining the optical element by depositing the at least one electrode pattern on the active material, wherein the deposition allows the application of the voltage distribution along the radius or the optical axis of the active material when the set of drive voltages are fed to the pair of end-terminals.

In a second aspect, the present disclosure provides an optical element comprising:

a pair of optically transparent substrates, wherein the pair of optically transparent substrates includes a first substrate and a second substrate;
an active material encased between the first substrate and the second substrate; and
a set of electrode patterns deposited on a first side of the active material, wherein

each electrode pattern of the set of electrode patterns is deposited on the first substrate,
each electrode pattern of the set of electrode patterns is having a pair of end-terminals,
each electrode pattern of the set of electrode patterns constitutes a set of segments,
each segment of the set of segments is associated with a resistance of a set of resistances,
the set of resistances enable application of a voltage distribution along a radius or an optical axis of the active material on feeding of a set of drive voltages to the pair of end-terminals of each electrode pattern of the set of electrode patterns, and
the application of the voltage distribution effectuates a variation of a refractive index of the active material.

The present disclosure provides the aforementioned first aspect and the aforementioned second aspect to generate at least one electrode pattern that may be deposited on an active material of an optical element. The method enables precise control of the refractive index in the active material by applying a tailored voltage profile through segmented electrode patterns, resulting in enhanced optical performance and real-time manipulation of light within the optical element. The method provides precise, pre-determined control of the refractive index profile in the active material through the voltage profile, which is applied using the at least one electrode pattern (i.e., segmented electrode patterns). The method ensures that the voltage distribution precisely aligns with the refractive index variations (i.e., the first variation) along the radius or optical axis of the material. The segmentation of the electrodes, with their associated resistances, allows for fine-tuning of the voltage across the material, leading to optimized light manipulation. This results in improved optical performance, enabling real-time adjustments in how light interacts with the optical element for various applications. The optical element is configured to respond to the voltage exactly as designed, leading to reliable and reproducible optical behavior.

In an embodiment, a single electrode pattern may be deposited on the active material. The electrode pattern may be constituted of a set of resistances that enable a linear or non-linear variation of refractive index of the active material based on an application of an electric field on the active material. The application of the electric field may involve feeding a set of drive voltages to a set of end-terminals of the electrode pattern. The set of drive voltages and the set of resistances of the electrode pattern may facilitate application of a voltage distribution (i.e., electric field) along a radius or an optical axis of the active material.

The active material may include a set of regions, and each region of the set of regions may be a circular region or an axial region. At each region of the set of regions, a voltage may be required to be applied to facilitate the application of the voltage distribution along the radius or the optical axis. The set of resistances constituting the electrode pattern may enable application of a unique voltage at each region of the active material. The set of regions may be in contact with a set of segments of the electrode pattern, i.e., each segment of the set of segments may be deposited on each region of the set of regions of the active material. Each segment of the electrode pattern may represent a resistance of the set of resistances that allows application of the unique voltage range at each region of the set of regions, thereby facilitating application of the voltage distribution along the radius or the optical axis on feeding the set of drive voltages to a set of end-terminals.

The application of a unique range of voltages at each region of the active material, by use of a specific resistance represented by a segment of the electrode pattern in contact with the corresponding region, may lead to a variation in the refractive index of the corresponding region. The variation in the refractive index of each region may be unique due to the application of the unique range of voltages. Thus, the set of resistances facilitate utilization of entire birefringence range of the active material. The utilization of the entire birefringence range may allow designing an optical element with an increased electronic tuneability range (available optical power range) and/or a larger aperture.

Throughout the present disclosure, the term "optical element" may refer to an optical element whose optical power can be changed. The optical power may be a positive power or a negative power that may be used for focusing or defocusing light. The optical element may be controlled to produce different optical powers at different parts of the optical element. The optical element includes a pair of optically transparent substrates. The pair of optically transparent substrates include two substrates, viz., a first substrate and a second substrate. The optical element further includes an active material. The active material is encased between the first substrate and the second substrate. An optical power may be produced in the optical element based on creation of differences between refractive indices at different regions of the active material. Thus, different optical powers may be produced further based on creation of differences between the refractive index at each of different regions of the active material. The refractive index difference is achieved by varying the refractive index differently in different regions of the active material via application of different electric fields (i.e., voltages) in different regions of the active material. The optical element may be a part of an optical lens assembly. The optical lens assembly may be used in ophthalmic glasses, sunglasses, a head-mounted display (HMD) i.e. in virtual reality (VR), mixed reality (MR), or augmented reality (AR) devices.

In an embodiment, at least one of the first substrate or the second substrate may include a set of circular grooves. The set of circular grooves may be in contact with different regions of the active material, i.e., each region of the active material is in contact with a circular groove. The circular grooves of the set of circular grooves may be concentric and different optical powers may be produced in different grooves.

Throughout the present disclosure, the term "active material" may refer to a material with anisotropic optical properties whose refractive index may be controlled (or varied) to produce a particular optical power at a particular region of the active material. In an example, the active material may be a nematic liquid crystal material. In a nematic liquid crystal material, the variation of the refractive index occurs only for one polarization state of light determined by the predetermined orientation of the liquid crystal molecules, thus, for polarization-independent optical elements, multiple optical elements with orthogonal states of polarization can be stacked on top of each other. Based on an application of an electric field on the active material, an alignment of liquid crystal molecules in different regions of the liquid crystal material may be controlled. In an embodiment, the different regions of the active material may refer to circular regions that may be concentric (i.e., have a common centre which is the centre of the active material). In another embodiment, the different regions may be situated at different distances along an optical axis that is passing through the centre of the active material. Based on the control of the alignment of liquid crystal molecules, the refractive index in the different regions of the liquid crystal material may be varied. Based on such variation of the refractive index, different optical powers may be produced in the different regions of the active material.

The refractive index profile of the active material may be determined based on the desired optical profile of the active material. The refractive index profile is indicative of a first variation of a refractive index difference along a radius or an optical axis of the active material. In an embodiment, the optical profile may refer to an optical path difference (OPD), expressed commonly in units of design wavelength of the optical device.

The OPD may be indicative of a delay that a light ray may undergo while passing through different regions of the set of regions of the active material. The delay undergone may be due to different effective distances due to refractive index difference that may be travelled by the light ray while passing through the different regions of the active material. In an embodiment, the OPD profile can correspond to e.g. spherical or aspherical, such as parabolic, negative or positive lens, cylindrical lens, diffraction grating, phase plate or optical wedge prism.

Once a desired OPD profile of the active material is determined, the refractive index difference $\Delta n$ associated with different positions along the radius or the optical axis, based on the determined OPD, a design wavelength $\lambda$ (i.e., a wavelength at which the optical element is designed to function) and the thickness of the active material layer of the optical element d, can be determined from formula

$$\Delta n = OPD \frac{\lambda}{d}$$

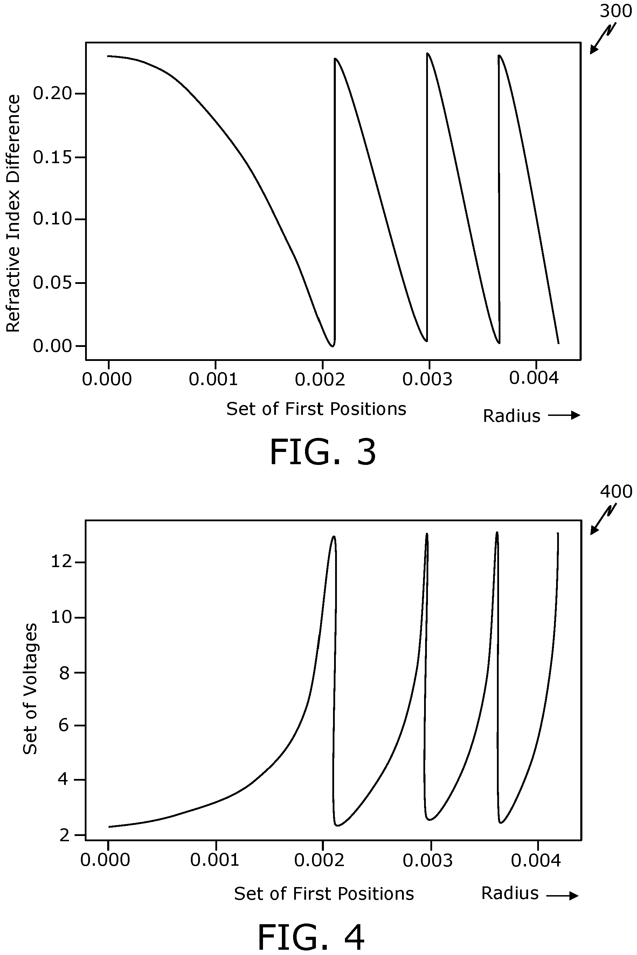

. The refractive index difference associated with a particular position (i.e., a first position) may be a difference between a refractive index at the first position on the radius or the optical axis and a refractive index at a second position where the OPD is "0". The OPD may be "0" at the centre of the active material. Thus, a refractive index difference associated with each first position of a set of first positions, indicative of a difference between refractive index at the corresponding first position on the radius or the optical axis and the refractive index at the second position, may be determined. Thus, the first variation may be a variation of the determined refractive index differences (Y-axis) that may be associated with the set of first positions along the radius or the optical axis of the active material (X-axis). The first variation represents the refractive index profile. An exemplary refractive index profile (i.e., the first variation) is depicted in FIG. 3.

The voltage profile is determined based on the refractive index profile. The voltage profile is indicative of a voltage distribution that is to be applied along the radius or the optical axis of the active material in order to generate an electric field that creates the target refractive index by changing the refractive index of the active material. The voltage distribution may include a set of voltages that may be required to be applied at the set of first positions along the radius or the optical axis of the active material. The set of first positions are situated in the different regions of the active material. The application of the voltage distribution causes a variation in the refractive index of the active material that corresponds to the refractive index profile. The voltage distribution is configured to precisely modulate the refractive index of an active material in alignment with the determined refractive index profile. The voltage profile is derived from the refractive index profile to accurately determine the voltage distribution needed to produce the required variation in the refractive index of the active material. A voltage of the set of voltages applied at each first position of the set of first positions along the radius or the optical axis may cause a variation in the refractive index at the corresponding first position. The variation of the refractive index may be such that a difference between the refractive index at the corresponding first position (after the application of the voltage) and the refractive index at the second position (where the OPD is "0") matches a refractive index difference associated with the corresponding first position as indicated in the refractive index profile. It may be noted that a count of first positions in the set of first positions may be as per implementation of the optical element. Therefore, a count of voltage levels that may be included in the set of voltages (i.e., the voltage distribution) may also depend on the implementation. An exemplary plot of the voltage profile (i.e., the voltage distribution) is depicted in FIG. 4.

Optionally, the the voltage profile is determined further based on a second variation of the refractive index of the active material with respect to a voltage applied to the active material. The second variation is determined based on at least one of a set of characteristics of the active material and a set of parameters of the active material. The second variation may be indicative of a refractive index response of the active material when the set of voltages are applied to the active material in a particular type of liquid crystal cell. The second variation can be determined by experimental measurements such as polarization interferometry or ellipsometry or by numerical models if the properties of the active material such as elastic coefficients, dielectric anisotropy and birefringence are known. For example, the active material may be a liquid crystal material whose refractive index may vary from 1.8 to 1.55 based on application of the set of voltages that fall in a range of 0-16 Volts. After the determination of the second variation, a polynomial or other approximating function that may include a set of coefficients such the second variation is approximated. Thereafter, the fitted polynomial or function may be used to determine a voltage that may be required to be applied at each first position of the set of first positions such that the refractive index at the corresponding first position undergoes a variation. The variation that the refractive index undergoes needs to be such that a difference between the refractive index at the corresponding first position (after application of the determined voltage) and the refractive index at the second position matches a refractive index difference that may be associated with the corresponding first position (as indicated in the refractive index profile).

In another embodiment, linear interpolation may be used to determine, from the measured or simulated second variation the voltage that may be required to be applied at the corresponding first position.

A portion of the second variation may be linear or almost linear while rest of the second variation may be non-linear. For example, the refractive index of the active material linearly decreases from 1.79 to 1.69 based on application of voltages falling in a range of 2-4 Volts. For enabling utilization of entire birefringence range of the active material, the second variation may be split into a plurality of portions. Each portion of the plurality of portions of the second variation may be linear (i.e., refractive index of the active material may linearly decrease or increase with respect to an increase or decrease in the voltage applied to the active material). For achieving a similar effect, voltages of the set of voltages (i.e., the voltage distribution) may be applied at each region of the set of regions of the active material. The application of the voltages leads to changes in orientations of molecules included in the corresponding region of the active material. These changes in the orientations of the molecules may lead to variation in the refractive index of the corresponding region. The corresponding region may include a subset of first positions of the set of first positions along the radius or the optical axis of the active material. A difference between the refractive index (after application of a voltage of the set of voltages) at each first position of the subset of first positions and the refractive index of the second position (where the "OPD" is "0") may match a refractive index difference associated with the corresponding first position (as indicated in the refractive index profile).

For enabling application of the voltage distribution (as indicated in the voltage profile) along the radius or the optical axis of the active material, at least one electrode pattern may be generated. Each electrode pattern includes a pair of end-terminals. Each electrode pattern constitutes a set of segments that are associated with a set of resistances. Each electrode pattern is designed strategically so that application of the set of drive voltages to the pair of end-terminals results in the (desired) voltage distribution along the radius or optical axis of the active material. In an embodiment, a single electrode pattern having a pair of end-terminals may be generated. The segments of the set of segments of the generated electrode pattern may be arranged in a continuous series and, thus, the electrode pattern may constitute a series of resistors. The set of resistances enable application of the voltage distribution along the radius or the optical axis of the active material when a set of drive voltages are applied to the pair of end-terminals of the electrode pattern. The application of the set of drive voltages to the pair of end-terminals and each resistance of the set of resistances may enable an application of voltages of the set of voltages (i.e., the voltage distribution) on each region of the set of regions of the active material. Each region may include a subset of first positions along the radius or the optical axis of the active material. In an embodiment, if each region of the set of regions is a circular region, then each segment of the set of segments of electrode pattern may be circular and include the subset of first positions. Further, each segment may enable application of the voltages of the set of voltages via a resistance of the set of resistances to which the corresponding segment may be associated with.

The method enables precise, pre-determined control of the refractive index and controlled voltage distribution through carefully designed electrode patterns and resistances, resulting in accurate and reliable optical performance. Therefore, the method can beneficially be employed for reliably and reproducibly obtaining optical elements of required optical behavior.

Optionally, the set of drive voltages may include a first drive voltage and a second drive voltage. The first drive voltage is fed to a first end-terminal of the pair of end-terminals of each electrode pattern and the second drive voltage is fed to a second end-terminal of the pair of end-terminals of each electrode pattern. In an embodiment, the set of drive voltages applied to the pair of end-terminals of an electrode pattern may include two voltages, viz., V1 and V2. The set of drive voltages may be selected based on the second variation, i.e., the refractive index response of the active material when the set of voltages are applied to the active material. The voltage level for V1 may be selected from amongst voltages at the lower end of the set of voltages to be applied on the active material while the voltage level for V2 may be selected from amongst voltages at the higher end of the set of voltages. The selection may be such that applications of V1 and V2 at the pair of end-terminals of the electrode pattern enable each resistance of the set of resistances to cause an application of voltages of the set of voltages at each region of the set of regions of the active material.

In an embodiment, the active material may be a nematic liquid crystal that include mesogenic molecules of rod-like (i.e., calamitic) or disk-type (discotic) shapes. The voltage level selected for V1 may be close to a threshold voltage of the mesogenic molecules. For example, the voltage level may be selected from a voltage range of 2.8-3.5 Volts. The voltage level for the drive voltage V2 may be determined based on properties of the liquid crystal. The properties may be indicated in the refractive index profile, which, in-turn, indicates refractive index differences associated with different regions of the liquid crystal (i.e., at the set of first positions along the radius or the optical axis of the liquid crystal). At higher voltage levels, the liquid crystal may saturate, i.e., the refractive index may not undergo variations (decrease) at those voltage levels. The saturation of the liquid crystal at higher voltages may limit electronic tuneability range, size, and aperture of the optical element. Therefore, the voltage level for V2 may correspond to a voltage level close to the saturation plateau (in the second variation or the refractive index response). For example, the voltage level may be selected to be 13 Volts.

Optionally, the set of resistances may correspond to a set of resistance values. In an embodiment, for a generated electrode pattern, all resistances of the set of resistances, to which the set of segments of the generated electrode pattern are associated, may correspond to different resistance values. In such an embodiment, a count of resistance values that may be included in the set of resistances may be same as a count of segments included in a set of segments. Each segment may be designed such that the width or thickness of the corresponding segment is different from each of the other segments of the set of segments. In another embodiment, the generated electrode pattern may be such that each subset of resistances of the set of resistances may be associated with a resistance value of the set of resistance values. Each subset of segments of the set of segments may be designed such that the width or thickness of all segments of the corresponding subset of segments is identical.

Optionally, each segment of the set of segments of each electrode pattern may be associated with a resistance of the set of resistances. For example, the set of resistances may include eight resistors, viz., R1, R2, ..., and R8. The set of segments may include eight segments, viz., S1, S2, ..., and S8. The first segment (i.e., S1) may be associated with the first resistor (i.e., R1). Similarly, the eighth segment (i.e., S8) may be associated with the eighth resistor (i.e., R8). In an embodiment, a resistance value of each resistance of the set of resistances, associated with each segment of the set of segments, may be controlled by varying a thickness of the corresponding segment and/or patterning the corresponding segment with a set of holes. The resistance value of a particular resistance (such as R1) may be increased by decreasing the thickness or width of the segment or increasing the length (such as S1) of the segment associated with the resistance. On the contrary, the resistance value of the resistance may be decreased by increasing the thickness or width or decreasing the length of the segment of the segment associated with the resistance. In some of the other embodiments, the resistance value of each resistance of the set of resistances, associated with each segment of the set of segments, may be controlled by patterning the corresponding segment with holes to increase the resistance of the segment.

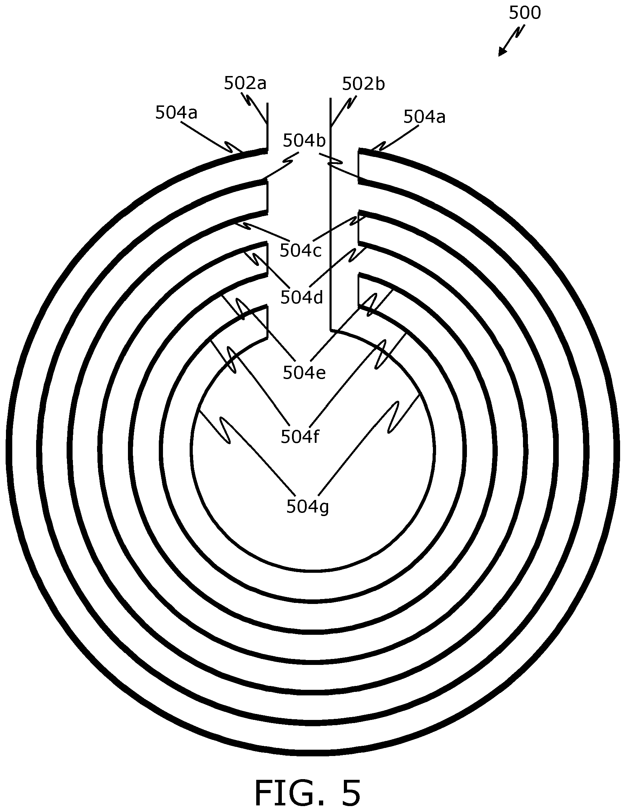

Optionally, the first end-terminal of each electrode pattern may be coupled to a first segment of the set of segments and the second end-terminal of the corresponding electrode pattern may be coupled to a second segment of the set of segments. The first segment and the second segment are extremities of the corresponding electrode pattern. Each of the first segment and the second segment may be connected to one segment of the set of segments. Each segment of the set of segments, apart from the first segment and the second segment, may connected to two segments of the set of segments. Thus, both ends of each of the segments, other than the first segment and the second segment, are connected to a segment of the set of segments. An exemplary electrode pattern with a pair of end-terminals and constituting a set of segments, where segments of the set of segments are coupled to other segments and the end-terminals, is depicted in FIG. 5.

The at least one generated electrode pattern may be deposited on the active material for obtaining the optical element. The deposition of the at least one electrode pattern on the active material allows application of the voltage distribution along the radius or the optical axis of the active material when the set of drive voltages are fed to the pair of end-terminals of the at least one electrode pattern. In an embodiment, a single electrode pattern may be deposited on the active material. The electrode pattern may be deposited as a transparent electrode layer that constitutes a set of segments that may be connected to each other. The transparent electrode layer may be made of indium tin oxide (ITO) or doped zinc oxide (ZnO). The ZnO is doped with aluminium or hydrogen. In some embodiments, the transparent electrode layer may be made of a conductive polymer or graphene.

Each segment of the set of segments, associated with each resistance of the set of resistances, may be deposited on each region of the set of regions of the active material. When the first drive voltage is fed to the first end-terminal and the second drive voltage is fed to the second end-terminal, the set of resistances cause an application of the set of voltages (i.e., the voltage distribution) at the set of regions. Specifically, at each region a resistance of the set of resistances may cause the application of voltages of the set of voltages that conforms to the voltage profile. This enablement may be due to the deposition of a segment, associated with the resistance, on the corresponding region of the active material. The voltages may be applied at the subset of first positions along the radius or the optical axis of the active material included in the corresponding region.

The application of the voltages at the subset of first positions included in each region may lead to variations in refractive index at the subset of first positions in the corresponding region. The variation may be such that difference between the refractive index at each first position of subset of first positions and the refractive index at the second position matches a refractive index difference associated with the corresponding first position (as indicated in the refractive index profile). Prior to the application of the set of voltages at the set of regions of the active material, a refractive index of the active material may match the refractive index of the first substrate and the second substrate to produce a base optical power. Upon application of the set of voltages at the set of regions (facilitated by the set of resistances when the set of drive voltages are fed to the pair of end-terminals), refractive index differences may be created between the active material and the first substate or between the active material and the second substate. The refractive index differences may be created due to the variations in the refractive index at the set of regions of the active material. The variations may be different in different regions of the set of regions in contact with different parts of the first substrate or the second substrate. The different variations may produce an optical path difference profile that corresponds to an optical element such as spherical or aspherical lens etc.

In an embodiment, the at least one electrode pattern may be deposited on a first substrate, which may be in contact with a first layer or a second layer of the active material. The at least one electrode pattern may be deposited using a patterned deposition mask. The patterned deposition mask may be deposited using laser writing or lithography methods. An electrode that feeds ground voltage may be deposited on a second substrate, which may in contact with a second layer of the active material. The electrode may be a continuous layer of conductive material or a patterned layer.

The second layer of the active material may be situated at the opposite side of the first layer the active material. Thus, the first layer is in contact with the first substrate, the second layer is in contact with the second substrate, and the at least one electrode pattern is situated between the first layer and the first substrate. The application of the set of voltages (i.e., the voltage distribution) on the first layer (as the at least one electrode pattern is deposited on the first layer) and the application of the ground voltage on the second layer may result in a creation of potential difference (an electric field) between the at least one electrode pattern and the electrode feeding the ground voltage. This potential difference may lead to the changes in the optical properties of the active material (for example, in the orientation of nematic molecules of the liquid crystal material).

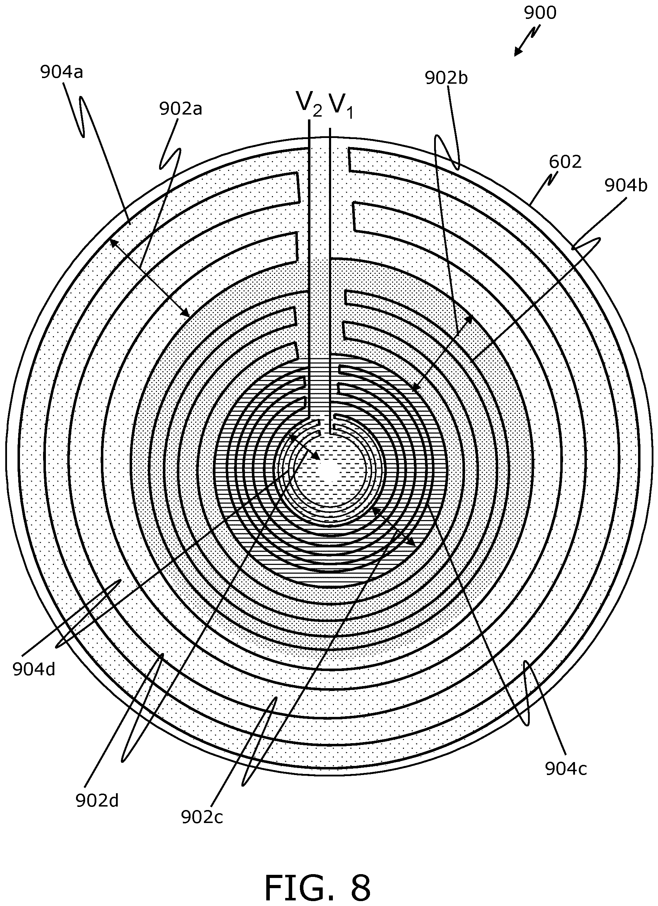

Optionally, the optical element may include a substrate that may be a planoconvex lens, a planoconcave lens, or a Fresnel lens. The substrate may be the first substrate. The at least one electrode pattern may follow a continuous spiral pattern if the substrate (i.e., the first substrate) is the Fresnel lens. The Fresnel lens may include a plurality of grooves that may be in contact the set of segments of each electrode pattern. The Fresnel lens may be optically transparent and include a set of concentric grooves. The set of segments, which constitute the electrode pattern, may be deposited on the set of concentric grooves. Further, the set of regions of the first layer of the active material (which include the set of first positions along the radius or the optical axis of the active material) may be in contact with the set of concentric grooves. The set of segments may be situated between the set of concentric grooves of the Fresnel lens (i.e., first substrate) and the set of regions. An exemplary electrode pattern with a continuous spiral pattern deposited on an active material is depicted in FIG. 8.

The present disclosure also relates to the second aspect as described above. Various embodiments and variants disclosed above, with respect to the aforementioned first aspect, apply *mutatis mutandis* to the second aspect.

Optionally, the the variation of the refractive index may correspond to a refractive index profile indicative of a first variation of a refractive index difference along the radius or the optical axis of the active material. The voltage distribution is determined based on the refractive index profile and a second variation of the refractive index of the active material with respect to a voltage applied to the active material.

A technical effect of determining the voltage distribution based on the refractive index profile and the second variation is that it enables applying a set of voltages along the radius or the optical axis of the active material such that refractive index of the active material undergoes a variation. The variation of the refractive index of the active material may be different at different regions of the active material. This may be due to application of voltages of the set of voltages at each region of the set of regions of the active material. The variation of the refractive index may correspond to a refractive index profile indicative of the first variation of the refractive index difference along the radius or the optical axis of the active material. The set of regions may include a set of first positions along the radius or the optical axis of the active material and each region may include a subset of first positions along the radius or the optical axis of the active material. Based on the application of the voltages at the subset of positions, the refractive index at each first position of the subset of positions may undergo a variation. The variation is such that difference between the refractive index at the corresponding first position and the refractive index at the second position (where OPD is "0") is equal to (or match) a refractive index difference associated at the corresponding first position indicated in the refractive index profile.

Optionally, the set of resistances correspond to a set of resistance values.

A technical benefit of the correspondence of the set of resistances to a set of resistance values is that this enables designing each electrode pattern of the set of electrode patterns, constituting a set of segments, where all segments of the set of segments are of different width. In some scenarios, the set of segments can include multiple subsets of segments, and each subset of segments may be associated with a resistance value of the set of resistance values. Further, the correspondence of the set of resistances to a set of resistance values enables application of the set of voltages at the set of regions (i.e., the set of first positions along the radius or the optical axis) of the active material on which the set of segments may be deposited. The application of the different voltages may be due to the set of resistances associated with the set of segments.

Optionally, each segment of the set of segments of each electrode pattern of the set of electrode patterns may be associated with a resistance of the set of resistances. The resistance value of each resistance of the set of resistances may be controlled based on at least one of varying a thickness or width of the corresponding segment or patterning the corresponding segment with holes.

A technical benefit of varying the thickness or width of, or patterning, segments of the set of segments is that it allows associating the segments with different resistances. The depositing of the set of segments (constituting each electrode pattern) allows application of the set of voltages (i.e., the voltage distribution) at the set of regions of the active material.

Optionally, the set of drive voltages may include a first drive voltage and a second drive voltage. The first drive voltage is fed to a first end-terminal of the pair of end-terminals of each electrode pattern of the set of electrode patterns and the second drive voltage is fed to a second end-terminal of the pair of end-terminals of each electrode pattern of the set of electrode patterns.

Optionally, the set of electrode patterns include a single electrode pattern, wherein the first drive voltage is fed to a first end-terminal of the pair of end-terminals and the second drive voltage is fed to a second end-terminal of the pair of end-terminals.

Optionally, the first end-terminal of each electrode pattern of the set of electrode patterns may be coupled to a first segment of the set of segments constituting the corresponding electrode pattern. Furthermore, the second end-terminal of each electrode pattern of the set of electrode patterns may be coupled to a second segment of the set of segments constituting the corresponding electrode pattern.

A technical benefit of feeding the first drive voltage and the second drive voltage to the first end-terminal of the pair of end-terminals respectively, of each electrode pattern of the set of electrode patterns, allows the set of resistances (i.e., the set of segments) to cause the application of the set of voltages (i.e., the voltage distribution) when the corresponding electrode pattern is deposited at a certain region of the active material. The application of the set of voltages may be achieved using only two voltage levels (i.e., V1 and V2) that may be fed to the pair of end-terminals of the corresponding electrode pattern. The application of voltages of the set of voltages causes variations in the refractive index of the active material in the region. The variations may be different in the different regions of the active material. The variations may result in differences between the refractive index of active material and the refractive index of the first substrate at distinct parts of the substrate (which may be in contact with the different regions of the active material). The differences between the refractive indices of the active material and the substrate at distinct parts of the active material may result in the production of different optical powers at distinct parts of the optical element.

Optionally, the first substrate is a planoconvex lens, a planoconcave lens, or a Fresnel lens. Additional optical elements such as lenses or polarizers may be incorporated into the assembly of the active optical element by implementing them as substrates or by placing them on the same optical path via other means. The Fresnel lens includes a plurality of grooves. Each groove of the plurality of grooves is in contact with each segment of the set of segments of an electrode pattern of the set of electrode patterns. Each electrode pattern of the set of electrode patterns is associated with a Fresnel zone of the set of Fresnel zones.

The Fresnel lens may include a set of circular grooves that may extend over the set of Fresnel zones. A segment of the set of segments, that constitutes an electrode pattern of the set of electrode patterns and is in contact with a circular groove of the set of circular grooves, may enable an application of voltages of the set of voltages on the corresponding circular groove. Each segment of the set of segments of each electrode pattern may be circular and connected to at least one other segment of the set of segments such that a continuous spiral pattern (i.e., electrode pattern) is obtained. The application of the set of voltages on each circular groove may facilitate a linear or non-linear variation of the refractive index of each region of the set of regions of the active material in contact with the corresponding circular groove.

The technical benefit of associating each segment of the set of segments with a resistance of the set of resistances based on the second variation of the active material is that the entire birefringence range of the active material (such as liquid crystal material) may be utilized, for production of optical powers, by feeding only two voltage levels at the pair of end-terminals of the electrode pattern. This, enables obtaining optical element whose optical power is tunable within a wide range and whose aperture size is large.

DETAILED DESCRIPTION OF THE DRAWINGS

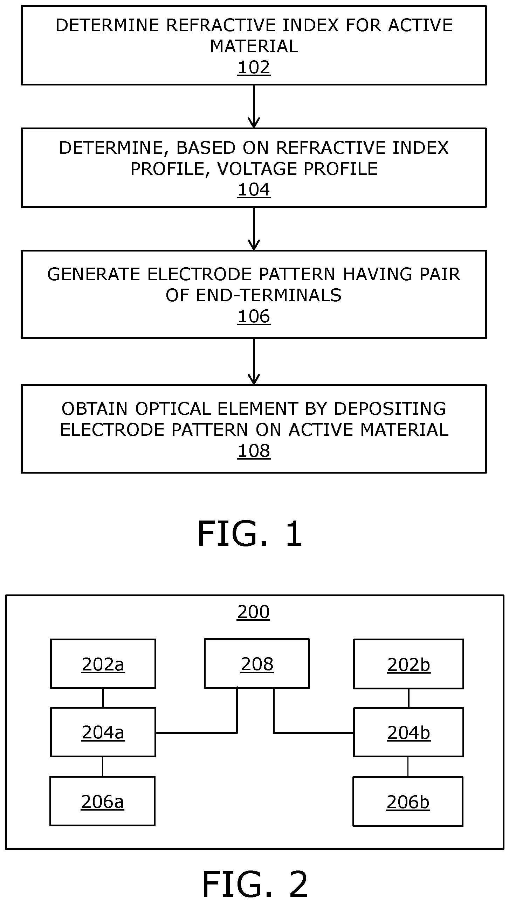

Referring to FIG. 1, depicted are steps of a method for electrode designing of an optical element, in accordance with an embodiment of the present disclosure. At step **102,** a refractive index profile for an active material included in the optical element is determined. The refractive index profile is indicative of a first variation of a refractive index difference along a radius or an optical axis of the active material. At step **104,** a voltage profile, indicative of a voltage distribution that is to be applied along the radius or the optical axis of the active material, is determined based on the refractive index profile and the second variation of the refractive index of the active material. The application of the voltage distribution causes a variation in a refractive index of the active material that corresponds to the refractive index profile. At step **106,** an electrode pattern having a pair of end-terminals maps is generated. The electrode pattern constitutes a set of segments associated with a set of resistances. The set of resistances enable application of the voltage distribution along the radius or the optical axis of the active material when a set of drive voltages are applied to the pair of end-terminals. At **108,** the optical element is obtained by depositing the electrode pattern on the active material. The deposition allows the application of the voltage distribution along the radius or the optical axis of the active material when the set of drive voltages are applied to the pair of end-terminals.

The aforementioned steps are only illustrative and other alternatives can also be provided where one or more steps are added, one or more steps are removed, or one or more steps are provided in a different sequence without departing from the scope of the claims herein.

Referring to FIG. 2, there is shown a schematic diagram of an optical lens assembly **200,** in accordance with an embodiment of the present disclosure. The optical lens assembly **200** comprises an optical element per eye, depicted as optical elements **202a** and **202b** for a first eye and a second eye respectively of a user. The optical lens assembly **200** further comprises electrode patterns **204a** and **204b,** active materials **206a** and **206b,** and a processor **208.** The electrode patterns **204a** and **204b** may enable application of the voltage distribution that is to be applied along the radius or the optical axis of the active materials **206a** and **206b** respectively. The voltage distribution that is to be applied for varying the refractive indices of active materials **206a** and **206b.** The processor **208** is configured to apply predetermined drive voltages (V1 and V2) at each pair of end-terminals of each of the electrode patterns **204a** and **204b.**

It may be understood by a person skilled in the art that FIG. 2 includes a simplified architecture of the optical element assembly **200,** for sake of clarity, which should not unduly limit the scope of the claims herein. It is to be understood that the specific implementation of the optical lens assembly **200** is provided as an example and is not to be construed as limiting to specific types of optical elements, electrode patterns, active materials, and processors. The person skilled in the art will recognize many variations, alternatives, and modifications of embodiments of the present disclosure.

Referring to FIG. 3, there is shown a graph that illustrates a target refractive index profile **300** for an active material included in an optical element, in accordance with an embodiment of the present disclosure. The refractive index profile **300** may be determined for an active material that may be included in the optical element. The refractive index profile may be indicative of a first variation of a refractive index difference along a radius or an optical axis of the active material that may be required to be obtained through application of a voltage profile on the active material.

The radius or the optical axis of the active material includes a set of first positions and the first variation constitutes refractive index differences associated with the set of first positions. The refractive index difference associated with each first position of the set of first positions may represent a difference between a refractive index at the corresponding first position and a refractive index at a second position of the active material where optical path difference is "0". The refractive index difference associated with each first position of the set of first positions in the active material, as depicted refractive index profile **300,** may be required to be obtained. Based on the refractive index profile **300,** a desired OPD profile may be obtained. For example, based on the refractive index profile **300,** a desired OPD profile for a positive Fresnel lens, with active layer thickness of 25 micrometres and associated with a design wavelength of 550 nanometres, is obtained. The refractive index profile **300** enables obtaining the desired OPD profile such that an entire birefringence range of the active material is utilized.

FIG. 3 is merely an example, which should not unduly limit the scope of the claims herein. A person skilled in the art will recognize many variations, alternatives, and modifications of embodiments of the present disclosure. For example, the refractive index profile **300** may be different for different active materials included in the same optical element or the refractive index profile **300** may be different for a different optical element.

Referring to FIG. 4, there is shown a graph that illustrates a voltage profile **400** indicative of a voltage distribution to be applied on an active material of an optical element, in accordance with an embodiment of the present disclosure. The voltage profile **400** may be determined based on the refractive index profile **300.** In some embodiments, the voltage profile **400** may be determined further based on an electro-optical response of the active material. The voltage profile **400** is indicative of a voltage distribution that is to be applied at a set of first positions along the radius or the optical axis of the active material. The application of the voltage distribution causes a variation in a refractive index at each first position along the radius or the optical axis. The variation corresponds to the refractive index profile **300.** The voltage distribution, indicated in the voltage profile **400** may include a set of voltages that may be required to be applied at the set of first positions along the radius or the optical axis of the active material. The active material may include a set of regions and a subset of first positions of the set of first positions may be situated in each region of the set of regions. Voltages of the set of voltages may be required to be applied at each region such that there is a variation in the refractive index at each first position of the set of first positions along the radius or the optical axis of the active material. The variation in the refractive index may follow the refractive index profile **300.**

FIG. 4 is merely an example, which should not unduly limit the scope of the claims herein. A person skilled in the art will recognize many variations, alternatives, and modifications of embodiments of the present disclosure. For example, the voltage profile **400** may be different for the different active materials included in the optical elements.

Referring to FIG. 5, there is illustrated an exemplary electrode pattern **500** to be deposited over an active material of an optical element, in accordance with an embodiment of the present disclosure. The exemplary electrode pattern **500** may include a pair of end-terminals. The pair of end-terminals include a first end-terminal **502a** and a second end-terminal **502b.** The exemplary electrode pattern **500** constitutes a set of segments **504a-504g.** The set of segments **504a-504g** follow a spiral pattern and are associated with a set of resistances. Each segment of the set of segments **504a-504g** is associated with a resistance of the set of resistances. Each resistance of the set of resistances may correspond to resistance value. The resistance value of each resistance is controlled by varying the thickness, width or length of a segment associated with the corresponding resistance. In some embodiments, all resistances of the set of resistances correspond to a resistance value. In such embodiments, the thickness, width and length are chosen so that the resistance value of all segments of the set of segments **504a-504g** is equal. When the set of segments **504a-504g** are deposited on an active material, the set of resistances, associated with the set of segments **504a-504g,** enable application of the voltage distribution at the set of first positions along the radius or the optical axis of the active material.

In an embodiment, the first end-terminal **502a** is coupled to a first segment **504a** of the set of segments **504a-504g** and the second end-terminal **502b** is coupled to a second segment **504g** of the set of segments **504a-504g.** Each of the first segment **504a** and the second segment **504g** is connected to one segment of the set of segments. The first segment **504a** may be connected to the third segment **504b** and the second segment **504g** is connected to the fourth segment **504f.** Each segment of the set of segments **504a-504g,** apart from the first segment **504a** and the second segment **504g** is connected to two segments of the set of segments **504a-504g.** Each of the third segment **504b,** the fourth segment **504f,** the fifth segment **504c,** the sixth segment **504d,** and the seventh segment **504e,** are connected to two segments of the set of segments **504a-504g.** For example, the sixth segment **504d** is connected to the fifth segment **504c** and the sixth segment **504d.**

FIG. 5 is merely an example, which should not unduly limit the scope of the claims herein. A person skilled in the art will recognize many variations, alternatives, and modifications of embodiments of the present disclosure. For example, the electrode pattern **500** may include any number of segments (unlike the "7" segments as illustrated in FIG. 5), the thickness, width or length of the segments of the set of segments **504a-504g** may be same or different. To achieve tuneability of optical power within a larger range, or to obtain a larger aperture, the optical element may include multiple such patterns to form a Fresnel lens multiple Fresnel zones (FIG. 8).

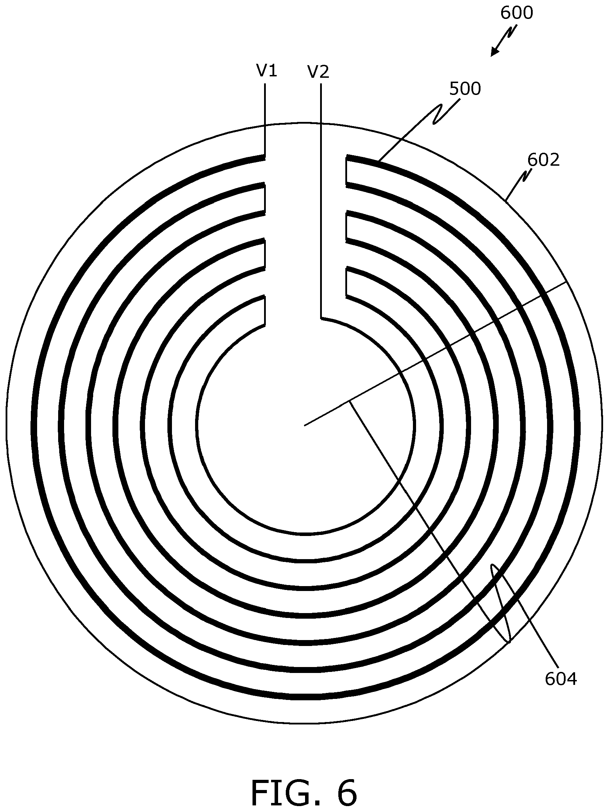

Referring to FIG. 6, there is illustrated an exemplary optical element **600** that is obtained based on deposition of an electrode pattern (such as the electrode pattern **500)** on an active material **602,** in accordance with an embodiment of the present disclosure. The deposited electrode pattern **500** follows a spiral pattern. The deposition of the electrode pattern **500** on the active material **602** allows application of the voltage distribution (i.e., the set of voltages) along a radius (such as radius **604)** or an optical axis of the active material **602** when a set of drive voltages are fed to the pair of end-terminals. The set of drive voltages include a first drive voltage (for example, V1) and a second drive voltage (for example, V2). The first drive voltage is fed to the first end-terminal **502a** of the pair of end-terminals and the second drive voltage is fed to the second end-terminal **502b** of the pair of end-terminals.

The active material **602** may include a set of regions and each segment of the set of segments **504a-504g** may be deposited on each region of the set of regions. The set of regions may include the set of first positions along the radius **604.** The feeding of the first drive voltage to the first end-terminal **502a** and the feeding of the second drive voltage to the second end-terminal **502b** of the pair of end-terminals may enable the set of resistances (associated with the set of segments **504a-504g)** to cause an application of the set of voltages (i.e., the voltage distribution) at the set of the first positions in the set of regions. Specifically, a subset of voltages may be applied on a subset of first positions of the set of first positions along the radius **604** at each region of the set of regions.

FIG. 6 is merely an example, which should not unduly limit the scope of the claims herein. A person skilled in the art will recognize many variations, alternatives, and modifications of embodiments of the present disclosure. For example, the optical element **600** may be of any shape (unlike a circular shape as illustrated in FIG. 6). Further, the deposition of the electrode pattern **500** (i.e., the segments of the set of segments **504a-504g)** on the active material **602** may follow any pattern (unlike a spiral pattern as illustrated in FIG. 6).

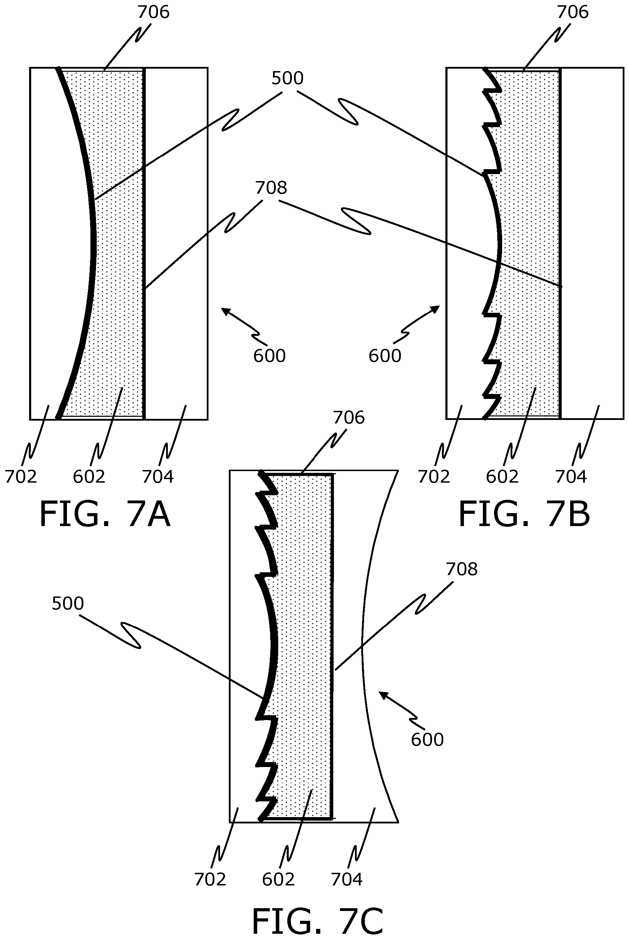

Referring to FIGs. 7A-7C, illustrated are cross-sectional views of an exemplary optical element (such as the optical element **600)** that includes two optically transparent substrates and an active element (such as the active material 602), in accordance with various embodiments of the present disclosure. The optical element **600** includes the active material **602** and a pair of optically transparent substrates. The pair of optically transparent substrates includes a first substrate **702** and a second substrate **704.** The active material **602** is encased between the first substrate **702** and the second substrate **704.** The optical element **600** may include a sealing contour **706.** The electrode pattern **500** is disposed between a first layer of the active material **602** and the first substrate **702.** An electrode **708** that feeds a ground voltage to a second layer of the active material **602** is disposed between the active material **602** and the second substrate **704.**

As shown in FIG. 7A, the first substrate **702** may be implemented as a planoconvex lens whose convex surface is in contact with the active material **602.** The curvature of the convex surface may correspond to a given optical power that is to be produced. Alternatively, as shown in FIGs. 7B and 7C, the first substrate **702** may be implemented as a Fresnel lens having a set of circular grooves that are concentric. Each circular grove of the set of circular grooves may be in contact with a region of the set of regions on the first layer of the active material **602**. In such a case, the concentric grooves of the Fresnel substrate are formed to emulate characteristics of the aforesaid planoconvex lens.

The application of the set of voltages (i.e., the voltage distribution) on the first layer caused by the set of resistances (as the set of segments **504a-504g** constituting the electrode pattern **500** is deposited on the first layer) and the application of the ground voltage caused by the electrode **708** (as the electrode **708** feeds ground voltage to the second layer) results in a creation of a potential difference between the electrode pattern **500** and the electrode **708**. This potential difference leads to the changes in refractive index of the active material **602** in the different regions of the active material **602**. The changes in the refractive index may produce different optical powers at the different parts of the optical element **600**.

With reference to FIG. 7C, the second substrate **704** may function as a passive optical element. The second substrate **704** may be implemented as a planoconcave lens. The curvature of the planoconcave lens may correspond to a fixed optical power.

FIGs. 7A-7C are merely examples, which should not unduly limit the scope of the claims herein. It is to be understood that the specific implementations of the optical element **600** are provided as examples and are not to be construed as limiting it to specific arrangements of the first substrate **702,** the second substrate **704,** the electrode pattern **500,** the active material **602,** and the electrode **708,** or to specific curvatures of the first substrate **702**. A person skilled in the art will recognize many variations, alternatives, and modifications of embodiments of the present disclosure.

FIG. 8 illustrates an exemplary optical element **900** that may function as a Fresnel lens having a plurality of Fresnel zones, in accordance with an embodiment of the present disclosure. The optical element **900** may include an optically transparent Fresnel substrate that is having a plurality of grooves. The Fresnel substrate may extent over four Fresnel zones **902a-902d** and each Fresnel zone may include a subset of grooves of the set of grooves. A set of electrode patterns **904a-904d** may be deposited on the Fresnel substrate. The Fresnel substrate, along with the set of electrode patterns **904a-904d,** may be deposited on a first side of the active material **602**. Each electrode pattern of the set of electrode patterns **904a-904d** is having a pair of end-terminals, and a set of drive voltages are fed to the pair of end-terminals of each electrode pattern of the set of electrode patterns **904a-904d**. For example, V1 (i.e., the first drive voltage) is fed to a first end-terminal of each electrode pattern of the set of electrode patterns **904a-904d** and V2 (i.e., the second drive voltage) is fed to a second end-terminal of the pair of end-terminals of each electrode pattern of the set of electrode patterns **904a-904d.**

Each electrode pattern of the set of electrode patterns **904a-904d** constitutes a set of segments. Furthermore, each segment of the set of segments is associated with a resistance of a set of resistances. The set of resistances enable application of a voltage distribution along a radius or an optical axis of the active material **602** on feeding of a set of drive voltages to the pair of end-terminals of each electrode pattern of the set of electrode patterns. The application of the voltage distribution effectuates a variation of a refractive index of the active material.

FIG. 8 is merely an example, which should not unduly limit the scope of the claims herein. A person skilled in the art will recognize many variations, alternatives, and modifications of embodiments of the present disclosure.

**Claims**

1. A method for designing an electrode pattern (500) for obtaining an optical element (600), the method comprising:

- determining a refractive index profile (300) for an active material (602) included in the optical element, wherein the refractive index profile is indicative of a first variation of a refractive index difference along a radius or an optical axis of the active material;
- determining, based on the refractive index profile, a voltage profile (400) indicative of a voltage distribution that is to be applied along the radius or the optical axis of the active material, wherein application of the voltage distribution causes a variation in a refractive index of the active material that corresponds to the refractive index profile;
- generating at least one electrode pattern (500), wherein each electrode pattern includes a pair of end-terminals (502a, 502b), wherein each electrode pattern constitutes a set of segments (504a-504g) associated with a set of resistances, and wherein the set of resistances enable application of the voltage distribution along the radius or the optical axis of the active material when a set of drive voltages are applied to the pair of end-terminals; and
- obtaining the optical element by depositing the at least one electrode pattern on the active material, wherein the deposition allows the application of the voltage distribution along the radius or the optical axis of the active material when the set of drive voltages is to the pair of end-terminals.

**2.** The method of claim 1, wherein the voltage profile (400) is determined further based on a second variation of the refractive index of the active material with respect to a voltage applied to the active material (602), and wherein the second variation is determined based on at least one of a set of characteristics of the active material and a set of parameters of the active material.

**3.** The method of claim 1 or 2, wherein the set of resistances corresponds to a set of resistance values.

**4.** The method of any of the preceding claims, wherein each segment of the set of segments (504a-504g) is associated with a resistance of the set of resistances, and wherein a resistance value of each resistance of the set of resistances is controlled based on at least one of varying a thickness, width, or length of the corresponding segment or patterning the corresponding segment with holes.

**5.** The method of any of the preceding claims, wherein the set of drive voltages include a first drive voltage and a second drive voltage, wherein the first drive voltage is fed to a first end-terminal (502a) of the pair of end-terminals (502a, 502b) and the second drive voltage is fed to a second end-terminal (502b) of the pair of end-terminals.

**6.** The method of claim 5, wherein the first end-terminal (502a) is coupled to a first segment (504a) of the set of segments (504a-504g) and the second end-terminal (502b) is coupled to a second segment (504g) of the set of segments, wherein each of the first segment and the second segment is connected to one segment of the set of segments, and wherein each segment of the set of segments, apart from the first segment and the second segment, is connected to two segments of the set of segments.

**7.** The method of any of the preceding claims, wherein the optical element includes a substrate, wherein the substrate is one of a planoconvex lens, a planoconcave lens, or a Fresnel lens, and wherein the at least one electrode pattern (500) follows a continuous spiral pattern if the substrate is the Fresnel lens.

**8.** An optical element (600, 900) comprising:

- a pair of optically transparent substrates, wherein the pair of optically transparent substrates includes a first substrate (702) and a second substrate (704);
- an active material (602) encased between the first substrate and the second substrate; and
- a set of electrode patterns deposited on a first side of the active material, wherein

- each electrode pattern of the set of electrode patterns is deposited on the first substrate,
- each electrode pattern of the set of electrode patterns is having a pair of end-terminals,
- each electrode pattern of the set of electrode patterns constitutes a set of segments,
- each segment of the set of segments is associated with a resistance of a set of resistances,
- the set of resistances enable application of a voltage distribution along a radius or an optical axis of the active material on feeding of a set of drive voltages to the pair of end-terminals of each electrode pattern of the set of electrode patterns, and
- the application of the voltage distribution effectuates a variation of a refractive index of the active material.

**9.** The optical element (600, 900) of claim 8, wherein the variation of the refractive index corresponds to a refractive index profile (300) indicative of a first variation of a refractive index difference along the radius or the optical axis of the active material (602), and wherein the voltage distribution is determined based on the refractive index profile and a second variation of the refractive index of the active material with respect to a voltage applied to the active material.

**10.** The optical element (600, 900) of claim 8 or 9, wherein the set of resistances correspond to a set of resistance values.

**11.** The optical element (600, 900) of any of the claims 8-10, wherein each segment of the set of segments of each electrode pattern of the set of electrode patterns is associated with a resistance of the set of resistances, and wherein a resistance value of each resistance of the set of resistances is controlled based on at least one of varying thickness, width, or length of the corresponding segment or patterning the corresponding segment with holes.

**12.** The optical element (600, 900) of any of the claims 8-11, wherein the set of drive voltages include a first drive voltage and a second drive voltage, wherein the first drive voltage is fed to a first end-terminal of the pair of end-terminals of each electrode pattern of the set of electrode patterns and the second drive voltage is fed to a second end-terminal of the pair of end-terminals of each electrode pattern of the set of electrode patterns.

**13.** The optical element (600) of any of the claims 8-12, wherein the set of electrode patterns includes a single electrode pattern (500), wherein the first drive voltage is fed to a first end-terminal (502a) of the pair of end-terminals (502a, 502b) and the second drive voltage is fed to a second end-terminal (502b) of the pair of end-terminals.

14. The optical element (600, 900) of any of the claims 8-12, wherein the first end-terminal of each electrode pattern of the set of electrode patterns is coupled to a first segment of the set of segments constituting the corresponding electrode pattern, and wherein the second end-terminal of each electrode pattern of the set of electrode patterns is coupled to a second segment of the set of segments constituting the corresponding electrode pattern.

15. The optical element (600, 900) of any of preceding claims 9-13, wherein the first substrate (702) is one of a planoconvex lens, a planoconcave lens, or a Fresnel lens, and wherein each electrode pattern of the set of electrode patterns follows a continuous spiral pattern if the first substrate is the Fresnel lens, wherein each electrode pattern of the set of electrode patterns is associated with a Fresnel zone of the set of Fresnel zones.

DETERMINE REFRACTIVE INDEX FOR ACTIVE
MATERIAL
102

DETERMINE, BASED ON REFRACTIVE INDEX
PROFILE, VOLTAGE PROFILE
104

GENERATE ELECTRODE PATTERN HAVING PAIR
OF END-TERMINALS
106

OBTAIN OPTICAL ELEMENT BY DEPOSITING
ELECTRODE PATTERN ON ACTIVE MATERIAL
108

# FIG. 1

200

202a

208

202b

204a

204b

206a

206b

# FIG. 2

FIG. 3

FIG. 4

FIG. 5

FIG. 6

706

500

708

600          600

702        602        704

## FIG. 7A

706

500

708

600

702        602        704

## FIG. 7B

706

500

708

600

702        602        704

## FIG. 7C

FIG. 8

# EUROPEAN SEARCH REPORT

**Application Number**

EP 25 16 4495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 226 533 B2 (E VISION SMART OPTICS INC [US]) 18 January 2022 (2022-01-18) * the whole document * ----- | 1,5-8, 12-15 | INV. G02F1/29 G02C7/08 G02F1/1343 |
| X | US 2024/085756 A1 (BHOWMICK AMIT [US] ET AL) 14 March 2024 (2024-03-14) * figures 4-7 * * paragraphs [0033], [0050], [0051], [0061], [0064], [0065], [0067] - [0070], [0074], [0105] - [0106] * ----- | 1-11, 13-15 | ADD. G02B3/08 |

**TECHNICAL FIELDS SEARCHED (IPC)**

G02F
G02C
G02B

The present search report has been drawn up for all claims

| Place of search | Date of completion of the search | Examiner |
|---|---|---|
| The Hague | 29 July 2025 | Topak, Eray |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 4495

This annex lists the patent family members relating to the patent documents cited in  the above-mentioned European search report.
The members are as contained in the European Patent Office EDP file on
The European Patent Office is in no way liable for these particulars which are merely given for the purpose of information.

29-07-2025

| Patent document cited in search report | | Publication date | Patent family member(s) | | Publication date |
|---|---|---|---|---|---|
| US 11226533 | B2 | 18-01-2022 | CA | 3160786 A1 | 10-06-2021 |
| | | | CN | 115004092 A | 02-09-2022 |
| | | | EP | 4073578 A1 | 19-10-2022 |
| | | | JP | 2023505287 A | 08-02-2023 |
| | | | KR | 20220124180 A | 13-09-2022 |
| | | | US | 2021318589 A1 | 14-10-2021 |
| | | | US | 2022308392 A1 | 29-09-2022 |
| | | | WO | 2021113792 A1 | 10-06-2021 |
| US 2024085756 | A1 | 14-03-2024 | NONE | | |

EPO FORM P0459

For more details about this annex : see Official Journal of the European Patent Office, No. 12/82